# EUROPEAN PATENT APPLICATION

(11) **EP 3 252 698 A1**
(43) Date of publication of application: **06.12.2017**
(21) Application number: 17171879.4
(22) Date of filing: 19.05.2017
(51) Int. Cl.: G06Q 40/02, G06Q 30/06

(54) **CURRENCY ACQUISITION DEVICES, SYSTEMS, AND METHODS**

(30) Priority: 31.05.2016 US 201615168722
(71) Applicant: NCR Corporation, Duluth, GA 30096 (US)
(72) Inventor: LOESCH, Ryan, Cumming, GA 30041 (US)
(74) Representative: Boakes, Jason Carrington

(57) **Abstract**

Various embodiments herein each include at least one of systems, methods, devices, and software for currency acquisition. One such embodiment, in the form of a method (300), includes receiving, via a short-range radio transceiver device from a mobile device, payment authorization data associated with a bankcard and a currency request (step 302). The method then transmits the currency request and payment authorization data via a bankcard payment network (step 304) and receives a currency request response via the bankcard payment network (step 306). The method then authorizes dispensing of currency in an amount of the currency request when the currency request response includes an approval (step 308).

## Description

Modern consumers are transacting without physical bankcards. This is driven by a desire to carry less items such as bankcards and cash. Consumers desire fast, secure, and seamless access to their payment accounts when conducting purchase transactions. However, current mobile wallet solutions generally do not provide ready access to cash. Point-Of-Sale (POS) and Automated Teller Machines (ATM) typically require physical bankcards to obtain currency.

Various embodiments herein each include at least one of systems, methods, devices, and software for currency acquisition. One such embodiment, in the form of a method, includes receiving, via a short-range radio transceiver device from a mobile device, payment authorization data associated with a bankcard and a currency request. The method then transmits the currency request and payment authorization data via a bankcard payment network and receives a currency request response via the bankcard payment network. The method then authorizes dispensing of currency in an amount of the currency request when the currency request response includes an approval.

Another method includes receiving a payment authorization request including a currency purchase request from a terminal via a bankcard payment network, the currency purchase request including data identifying a currency amount requested and a payment account. The payment authorization request in such embodiments originates with a bankcard holder authorization received from a mobile device by a short-range radio transceiver device of the terminal. The method then processes the payment authorization request in view of an available currency balance of the payment account for fulfilling the payment authorization request. When the payment authorization request including the currency purchase request is no greater than the available currency balance, this method includes debiting the available currency balance and transmitting an authorization of the payment authorization request via the bankcard payment network to the terminal.

Another embodiment is in the form of a terminal, such as an ATM or other self-service terminal-type. The terminal includes at least one currency cassette, a currency dispenser that receives currency from the at least one currency cassette and dispenses received currency, at least one user interface device to receive user input, and a short-range radio transceiver device. The terminal further includes a terminal controller coupled to the at least one currency cassette, the currency dispenser, each of the at least one user interface devices, and the short-range radio transceiver device and including at least one processor, at least one memory device, and at least one network interface device. The at least one memory device stores instructions executable by the at least one processor to perform data processing activities. The data processing activities include receiving, via the short-range radio transceiver device from a mobile device, payment authorization data associated with a bankcard account and receiving, the at least one user interface device, a currency request. The data processing activities further include transmitting the currency request and payment authorization data via the at least one network interface device over a bankcard payment network and receiving a currency request response via the at least one network interface device over the bankcard payment network. The data processing activities additionally include dispensing currency from the at least one currency cassette via the currency dispenser in an amount of the currency request when the currency request response includes an approval.

According to a first aspect of the present invention, there is a provided a method comprising: receiving, via a short-range radio transceiver device from a mobile device, payment authorization data associated with a bankcard and a currency request; transmitting the currency request and payment authorization data via a bankcard payment network; receiving a currency request response via the bankcard payment network; and authorizing dispensing of currency in an amount of the currency request when the currency request response includes an approval.

Optionally, the authorization data may be received from a mobile wallet app that executes on the mobile device.

Optionally, the short-range radio transceiver device may be a device of a self-service terminal (SST).

Optionally, the short-range radio transceiver device may be a Near-Field Communication (NFC) radio transceiver device.

Optionally, the SST may be an Automated Teller Machine (ATM).

Optionally, the currency request may be received by the ATM as input via a user interface and at least one input device of the ATM, the input identifying a currency amount of the currency request.

Optionally, the bankcard may be a credit card.

According to a second aspect of the present invention, there is provided a method comprising: receiving a payment authorization request including a currency purchase request from a terminal via a bankcard payment network, the currency purchase request including data identifying a currency amount requested and a payment account, the payment authorization request originating with a bankcard holder authorization received from a mobile device by a short-range radio transceiver device of the terminal; processing the payment authorization request in view of an available currency balance of the payment account for fulfilling the payment authorization request; and when the payment authorization request including the currency purchase request is no greater than the available currency balance, debiting the available currency balance and transmitting an authorization of the payment authorization request via the bankcard payment network to the terminal.

Optionally, the the payment authorization request may be originated with the terminal and may be received, processed, and relayed by a token service provider to a bankcard issuer, the processing performed by the token service provider performed to translate tokenized bankcard data to a form known by computing systems of a bankcard issuer computing system to associate the payment authorization request with a bankcard account maintained on the bankcard issuer computing system, the relaying performed by the token service provider including transmitting the translated payment authorization request to the bankcard issuer computing system via the bankcard payment network.

Optionally, the terminal may be a Self-Service Terminal (SST).

Optionally, the SST may be an Automated Teller Machine (ATM).

Optionally, processing the payment authorization request may be further performed in view of at least one rule other than an available currency balance rule.

Optionally, the at least one rule may include a currency purchase authorization rule that evaluates data associated with the payment account indicating whether currency purchases are authorized for the payment account, application of the currency purchase authorization rule resulting in either disapproval of the currency purchase request or authorization of the currency purchase request subject to the available currency balance being equal to or greater than the currency amount requested.

Optionally, the at least one rule may further include at least one currency purchase limit rule that limits an amount of currency that can be purchased in view of at least one factor.

Optionally, the at least one factor may include a currency purchase limit in view of at least one of a single transaction, a daily limit, a weekly limit, and a monthly limit.

According to a third aspect of the present invention, there is provided a terminal comprising: at least one currency cassette; a currency dispenser that receives currency from the at least one currency cassette and dispenses received currency; at least one user interface device to receive user input; a short-range radio transceiver device; a terminal controller coupled to the at least one currency cassette, the currency dispenser, each of the at least one user interface devices, and the short-range radio transceiver device and including at least one processor, at least one memory device, and at least one network interface device, the at least one memory device storing instructions executable by the at least one processor to perform data processing activities comprising: receiving, via the short-range radio transceiver device from a mobile device, payment authorization data associated with a bankcard account; receiving, the at least one user interface device, a currency request; transmitting the currency request and payment authorization data via the at least one network interface device over a bankcard payment network; receiving a currency request response via the at least one network interface device over the bankcard payment network; and dispensing currency from the at least one currency cassette via the currency dispenser in an amount of the currency request when the currency request response includes an approval.

Optionally, the payment authorization data may be received from a mobile wallet app that executes on the mobile device.

Optionally, the terminal may be a self-service terminal (SST).

Optionally, the short-range radio transceiver device may be a Near-Field Communication (NFC) radio transceiver device.

Optionally, the bankcard account may be a credit card account.

These and other aspects of the present invention will be apparent from the following specific description, given by way of example, with reference to the accompanying drawings, in which:
FIG. 1 is a logical block diagram of a system process flow, according to an example embodiment.
FIG. 2 is a logical block diagram of a system process flow, according to an example embodiment.
FIG. 3 is a block flow diagram of a method, according to an example embodiment.
FIG. 4 is a block flow diagram of a method, according to an example embodiment.
FIG. 5 is a block diagram of a computing device, according to an example embodiment.

Various embodiments herein each include at least one of systems, methods, devices, and software for currency acquisition. Some such embodiments enable consumers to essentially purchase currency utilizing a bankcard, such as a credit card, debit card, or other card for which the credit or funds therefore are accessed via a credit or debit card transaction processing network. Such solutions enable consumers to have cash access via digital or mobile wallets that are maintained and accessed via their mobile devices. These and other embodiments are described herein with reference to the figures.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

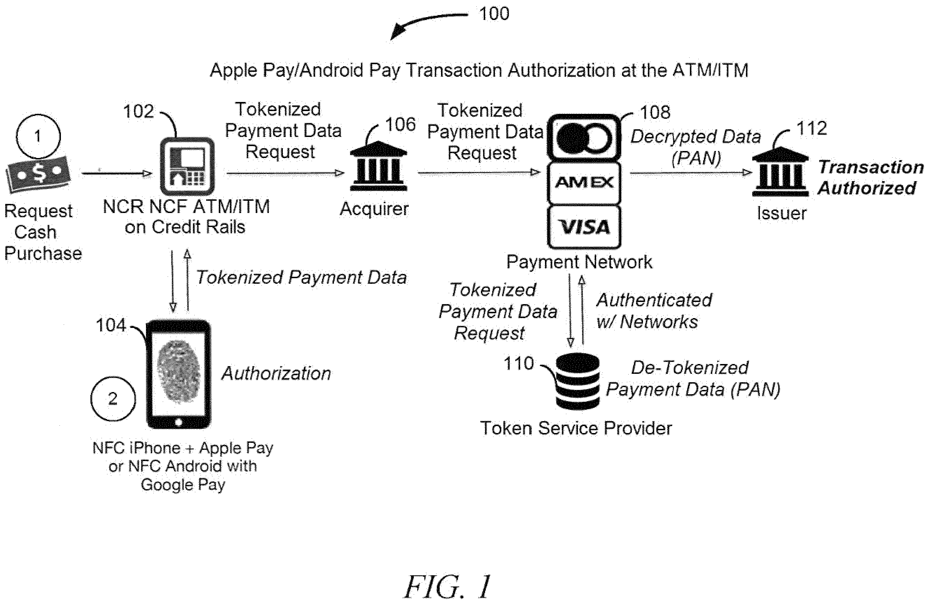

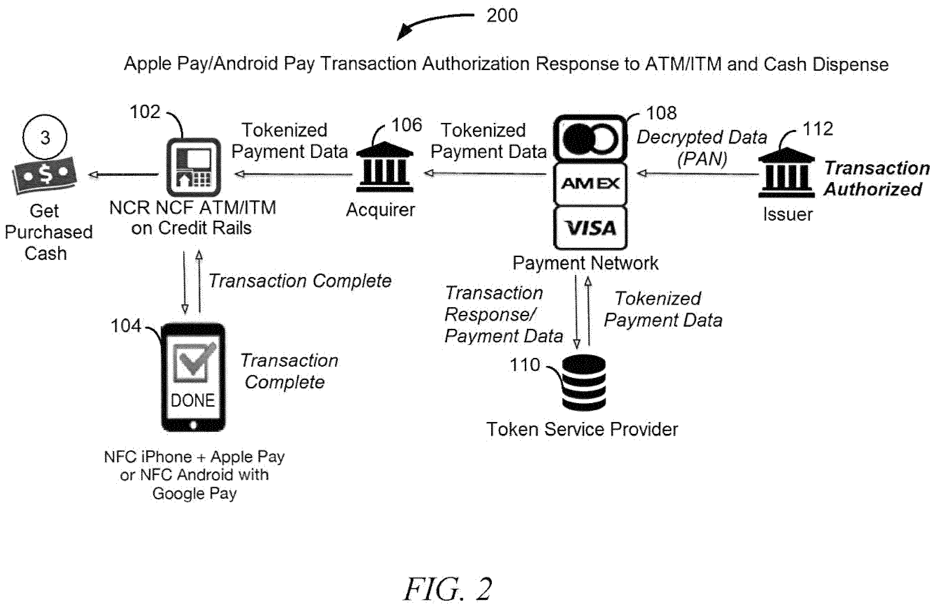

FIG. 1 is a logical block diagram of a system process 100 flow, according to an example embodiment. The process 100 is an example of how a user may request (1) to purchase currency at a terminal 102, such an an ATM, POS terminal, or other terminal type when providing (2) payment account (e.g., credit card, debit card, etc.) information to the terminal 102 via a mobile wallet solution on a mobile device 104. Once the terminal 102 receives the request (1) and the payment account information has been provided (2), the terminal transmits the request via a network to an acquirer system 106. The acquirer system 106 is a system to which an operator of the terminal 102 subscribes for processing of such transactions. The acquirer system 106 then transmits the request to via a credit card payment network 108 to a token service provider 110. The token service provider 110 is a system that operates to translate a tokenized form of the credit or debit card data into actual card number data that can be processed to the cardholder's account. The detokenized payment data is then transmitted by the token service provider 110 to a card issuer system 112, which then authorizes or denies the payment. The process 100 then continues with the process 200 of FIG. 2.

FIG. 2 is a logical block diagram of a system process 200 flow, according to an example embodiment. The process 200 is a continuation of the process 100 of FIG. 1 at the point where the card issuer system 112 has approved the transaction. The card issuer system 112 returns the approval via the payment network 108 t the token service provider system 110. The token service provider system 110 tokenizes the card data and returns the approval, of denial if that is the case, to the acquirer system 106 which then relays the data back to the terminal 102. The terminal 102 then dispenses (3) the currency when the terminal is so enabled. Otherwise, a teller may provide the currency.

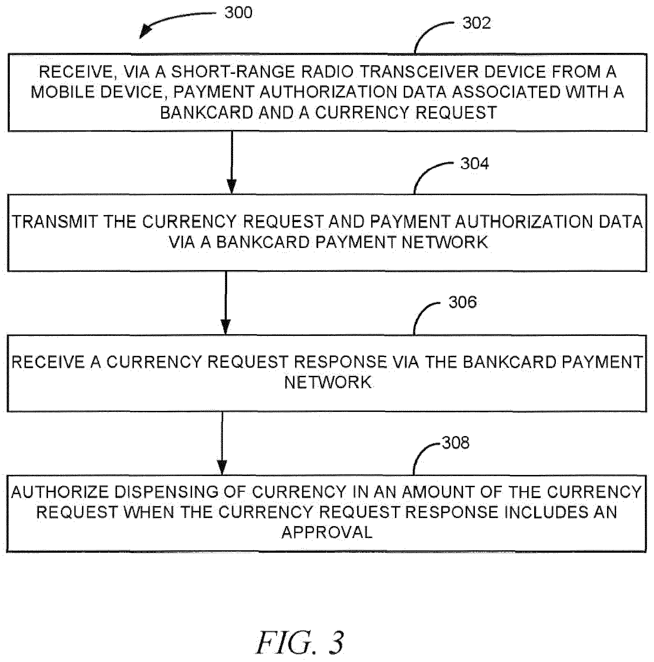

FIG. 3 is a block flow diagram of a method 300, according to an example embodiment. The method 300 is an example of a method that may be performed by a terminal, such as a self-service terminal (SST), which may be an ATM. The method 300 includes receiving 302, via a short-range radio transceiver device from a mobile device, payment authorization data associated with a bankcard and a currency request. The method 300 further includes transmitting 304 the currency request and payment authorization data via a bankcard payment network and receiving 306 a currency request response via the bankcard payment network. The method 300 then authorizes 308 dispensing of currency in an amount of the currency request when the currency request response includes an approval.

In some embodiments of the method 300, the payment authorization data is received from a mobile wallet app that executes on the mobile device. In some embodiments, the short-range radio transceiver device is a Near-Field Communication (NFC) radio transceiver device.

In some embodiments, when the terminal is an ATM, the currency request is received 302 by the ATM as input via a user interface and at least one input device of the ATM, the input identifying a currency amount of the currency request.

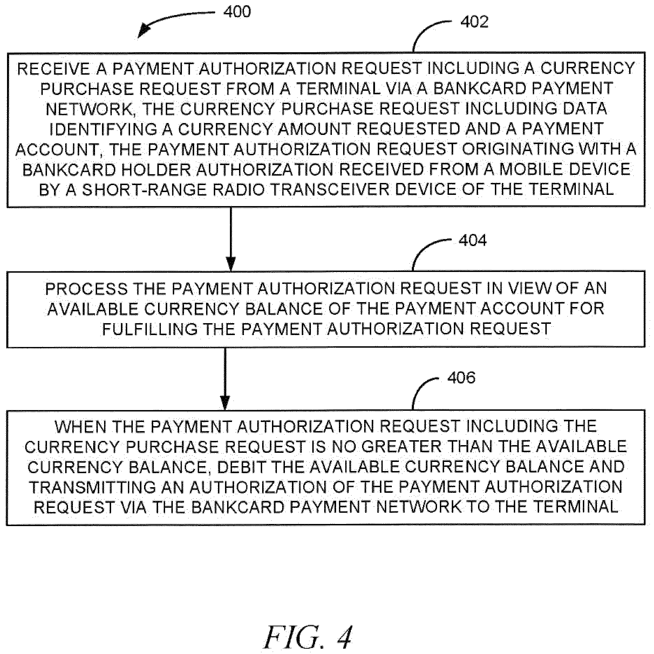

FIG. 4 is a block flow diagram of a method 400, according to an example embodiment. The method 400 is an example of a method that may be performed, at least in part, by a card issuer system, such as the card issuer system 112 of FIG. 1. The method 400 includes receiving 402 a payment authorization request including a currency purchase request from a terminal via a bankcard payment network. The currency purchase request in such embodiments may include data identifying a currency amount requested and a payment account. The payment authorization request in such embodiments originates with a bankcard holder authorization (e.g., authentication) received from a mobile device by a short-range radio transceiver device of the terminal. The method 400 further includes processing 404 the payment authorization request in view of an available currency balance of the payment account for fulfilling the payment authorization request and, when the payment authorization request including the currency purchase request is no greater than the available currency balance, debiting 406 the available currency balance and transmitting an authorization of the payment authorization request via the bankcard payment network to the terminal.

In some embodiments, the payment authorization request originates with the terminal and is received, processed, and relayed by a token service provider to a bankcard issuer. The processing performed by the token service provider in such embodiments may be performed to translate tokenized bankcard data to a form known by computing systems of a bankcard issuer computing system to associate the payment authorization request with a bankcard account maintained on the bankcard issuer computing system. The relaying in such embodiments performed by the token service provider includes transmitting the translated payment authorization request to the bankcard issuer computing system via the bankcard payment network.

In some embodiments of the method 400, the processing 404 of the payment authorization request is further performed in view of at least one rule other than an available currency balance rule. The at least one rule may include a currency purchase authorization rule that evaluates data associated with the payment account indicating whether currency purchases are authorized for the payment account. Application of the currency purchase authorization rule in such embodiments may result in either disapproval of the currency purchase request or authorization of the currency purchase request subject to the available currency balance being equal to or greater than the currency amount requested. The at least one rule further may also include at least one currency purchase limit rule that limits an amount of currency that can be purchased in view of at least one factor, such as a daily, weekly, monthly, or single transaction limit.

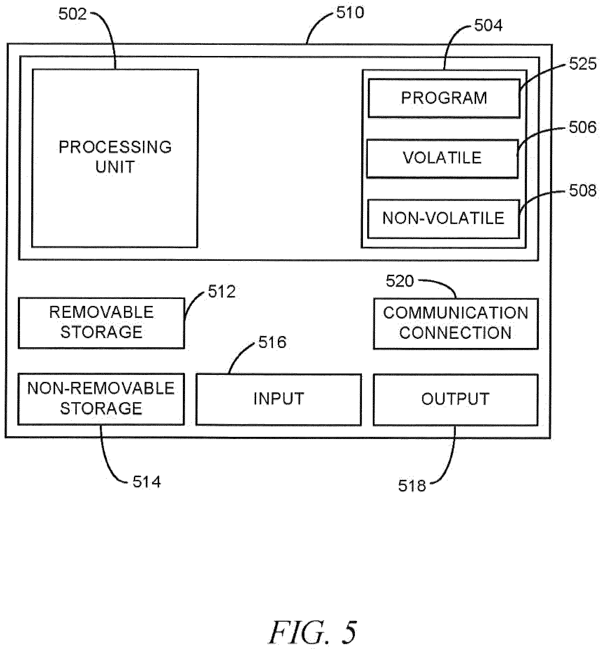

FIG. 5 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components. One example computing device in the form of a computer 510, may include a processing unit 502, memory 504, removable storage 512, and non-removable storage 514. Although the example computing device is illustrated and described as computer 510, the computing device may be in different forms in different embodiments. For example, the computing device may instead be a smartphone, a tablet, smartwatch, or other computing device including the same or similar elements as illustrated and described with regard to FIG. 5. Devices such as smartphones, tablets, and smartwatches are generally collectively referred to as mobile devices. Further, although the various data storage elements are illustrated as part of the computer 510, the storage may also or alternatively include cloud-based storage accessible via a network, such as the Internet.

Returning to the computer 510, memory 504 may include volatile memory 506 and non-volatile memory 508. Computer 510 may include - or have access to a computing environment that includes a variety of computer-readable media, such as volatile memory 506 and non-volatile memory 508, removable storage 512 and non-removable storage 514. Computer storage includes random access memory (RAM), read only memory (ROM), erasable programmable read-only memory (EPROM) and electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 510 may include or have access to a computing environment that includes input 516, output 518, and a communication connection 520. The input 516 may include one or more of a touchscreen, touchpad, mouse, keyboard, camera, one or more device-specific buttons, one or more sensors integrated within or coupled via wired or wireless data connections to the computer 510, and other input devices. The computer 510 may operate in a networked environment using a communication connection 520 to connect to one or more remote computers, such as database servers, web servers, and other computing device. An example remote computer may include a personal computer (PC), server, router, network PC, a peer device or other common network node, or the like. The communication connection 520 may be a network interface device such as one or both of an Ethernet card and a wireless card or circuit that may be connected to a network. The network may include one or more of a Local Area Network (LAN), a Wide Area Network (WAN), the Internet, and other networks. In some embodiments, the communication connection 520 may also or alternatively include a transceiver device, such as a BLUETOOTH® device that enables the computer 510 to wirelessly receive data from and transmit data to other BLUETOOTH® devices.

Computer-readable instructions stored on a computer-readable medium are executable by the processing unit 502 of the computer 510. A hard drive (magnetic disk or solid state), CD-ROM, and RAM are some examples of articles including a non-transitory computer-readable medium. For example, various computer programs 525 or apps, such as one or more applications and modules implementing one or more of the methods illustrated and described herein or an app or application that executes on a mobile device or is accessible via a web browser, may be stored on a non-transitory computer-readable medium.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A method comprising:
receiving, via a short-range radio transceiver device from a mobile device, payment authorization data associated with a bankcard and a currency request (step 302);
transmitting the currency request and payment authorization data via a bankcard payment network (step 304);
receiving a currency request response via the bankcard payment network (step 306); and
authorizing dispensing of currency in an amount of the currency request when the currency request response includes an approval (step 308).

2. A method according to claim 1, wherein the payment authorization data is received from a mobile wallet app that executes on the mobile device.

3. A method according to any preceding claim, wherein the short-range radio transceiver device is a device of a self-service terminal (SST).

4. A method according to any preceding claim, wherein the short-range radio transceiver device is a Near-Field Communication (NFC) radio transceiver device.

5. A method according to any preceding claim, wherein the SST is an Automated Teller Machine (ATM).

6. A method according to any preceding claim, wherein the currency request is received by the ATM as input via a user interface and at least one input device of the ATM, the input identifying a currency amount of the currency request.

7. A method according to any preceding claim, wherein the bankcard is a credit card.

8. A terminal comprising:
at least one currency cassette;
a currency dispenser that receives currency from the at least one currency cassette and dispenses received currency;
at least one user interface device to receive user input;
a short-range radio transceiver device;
a terminal controller coupled to the at least one currency cassette, the currency dispenser, each of the at least one user interface devices, and the short-range radio transceiver device and including at least one processor, at least one memory device, and at least one network interface device, the at least one memory device storing instructions executable by the at least one processor to perform data processing activities comprising:
receiving, via the short-range radio transceiver device from a mobile device, payment authorization data associated with a bankcard account;
receiving, the at least one user interface device, a currency request;
transmitting the currency request and payment authorization data via the at least one network interface device over a bankcard payment network;
receiving a currency request response via the at least one network interface device over the bankcard payment network; and
dispensing currency from the at least one currency cassette via the currency dispenser in an amount of the currency request when the currency request response includes an approval.

9. A terminal according to claim 8, wherein the payment authorization data is received from a mobile wallet app that executes on the mobile device.

10. A terminal according to any preceding claim, wherein terminal is a self-service terminal (SST).

11. A terminal according to any preceding claim, wherein the short-range radio transceiver device is a Near-Field Communication (NFC) radio transceiver device.

12. A terminal according to any preceding claim, wherein the bankcard account is a credit card account.
